Europäisches Patentamt

European Patent Office

Office européen des brevets

(11) Veröffentlichungsnummer: **0 240 908 B1**

(12) # EUROPÄISCHE PATENTSCHRIFT

(45) Veröffentlichungstag der Patentschrift:
23.10.91 Patentblatt 91/43

(51) Int. Cl.$^5$: **B23B 5/16**

(21) Anmeldenummer: **87104741.1**

(22) Anmeldetag: **31.03.87**

(54) Werkzeug zum Abschälen von Rohroberflächen.

(30) Priorität: **07.04.86 CH 355/86**

(43) Veröffentlichungstag der Anmeldung:
**14.10.87 Patentblatt 87/42**

(45) Bekanntmachung des Hinweises auf die
Patenterteilung:
**23.10.91 Patentblatt 91/43**

(84) Benannte Vertragsstaaten:
**AT CH DE FR GB IT LI SE**

(56) Entgegenhaltungen:
**FR-A- 2 570 007**

(56) Entgegenhaltungen:
**US-A- 1 691 763**
**US-A- 3 371 565**
**US-A- 3 499 178**
**US-A- 3 605 266**

(73) Patentinhaber: **GEORG FISCHER
AKTIENGESELLSCHAFT
Mühlentalstrasse 105
CH-8201 Schaffhausen (CH)**

(72) Erfinder: **Thalmann, Alfred
Brunngasse 71
CH-8448 Uhwiesen (CH)**
Erfinder: **Thalmann, Jürg
Brunngasse 71
CH-8448 Uhwiesen (CH)**

EP 0 240 908 B1

## Beschreibung

Die Erfindung betrifft ein Werkzeug zum Abschälen von Rohroberflächen, wie es im Oberbegriff von Anspruch 1 gekennzeichnet ist

Zur Vorbereitung von Kunststoffrohren für eine Muffenverbindung durch Schweissen oder Kleben oder zum Anschweissen eines Anbohrformstückes für eine Abzweigleitung ist es erforderlich, die oberste Schicht der entsprechenden Rohroberfläche durch einen Schälvorgang kurz vor dem Schweiss- oder klebevorgang zu entfernen. Insbesonders die Beseitigung der durch UV-Lichteinwirkung entstandenen Oxydschicht kurz vor der Verschweissung ist sehr wichtig, da diese die Schweissung nachteilig beeinflusst.

Hierfür ist ein dem Oberbegriff von Anspruch 1 entsprechendes Schalwerkzeug bekannt geworden (EP-A2-0164986), welches ein an einem Bügel drehbar angeordnetes und mit einem Hebel rotierend antreibbares Schälwerkzeug aufweist. Mit dem gleichen Hebel ist über einen offen Zahntrieb eine Führungsrolle antreibbar, wodurch der umfangsmässige Vorschub entsteht. Dieses Werkzeug ist nur für die Bearbeitung von Rohrenden mit einer durch das Werkzeug vorgegebenen Länge geeignet, da es nur axial auf das Rohrende aufgesteckt werden kann. Nachteilig ist ausserdem, dass das Werkzeug bei der üblichen Verwendung an Baustellen mit Erdgräben durch den Zahntrieb sehr störanfällig ist.

Aufgabe der vorliegenden Erfindung ist die Schaffung eines Werkzeuges der eingangs genannten Art, mittels welchem das Abschälen einer Oberflächenschicht an Rohrenden mit beliebiger Länge als auch an einem für eine Abzweigung vorgesehenen Teil eines durchgehenden Rohrstranges möglich ist. Dabei soll das Werkzeug bei einfacher und störungsfreier Handhabung auch für den Einsatz an Baustellen geeignet sein.

Diese Aufgabe wird durch die kennzeichnenden Merkmale von Anspruch 1 gelöst.

Weitere vorteilhafte Ausgestaltungen der Erfindung sind in den abhängigen Ansprüchen gekennzeichnet.

Durch die Ausbildung der Halterung als zwei um ein Gelenk aufweitbare Bügel, kann das Werkzeug axial als auch radial aufgesetzt werden. Insbesonderes kann es radial durch Aufklappen an jeder beliebigen Stelle des Rohrstranges aufgesetzt werden, wobei bei jeder beliebigen Länge, die grösser ist als die Schneidmesserlänge, die äusserste Schicht am Rohr durch einen Schälvorgang entfernt werden kann. Durch die federnde Zusammmenspannbarkeit der beiden Bügel können auch unrunde bzw. leicht ovale Rohre mit gleichmässiger Spantiefe geschält werden, ohne dass Verklemmungen oder unbearbeitete Stellen auftreten können. Durch die vorteilhafte schwenkbare Anordnung des Schneidmessers ist auch ein gleichmassiger Schälvorgang ohne Rillenbildung in Rohrlängsrichtung gewährleistet

Die Erfindung ist in den beiliegenden Zeichnungen beispielsweise dargestellt und nachfolgend beschrieben.

Es zeigen:

Fig. 1 eine Seitenansicht, teils im Schnitt von einem Werkzeug zum Abschälen von Rohroberflächen,

Fig. 2 einen Schnitt entlang der Linie II-II von Fig. 1,

Fig. 3 einen Teillängsschnitt entlang der Linie III-III von Fig. 2 in vergrösserter Darstellung,

Fig. 4 einen Schnitt entlang der Linie IV-IV von Fig. 1 und

Fig. 5 einen schnitt entlang der Linie V-V von Fig. 1.

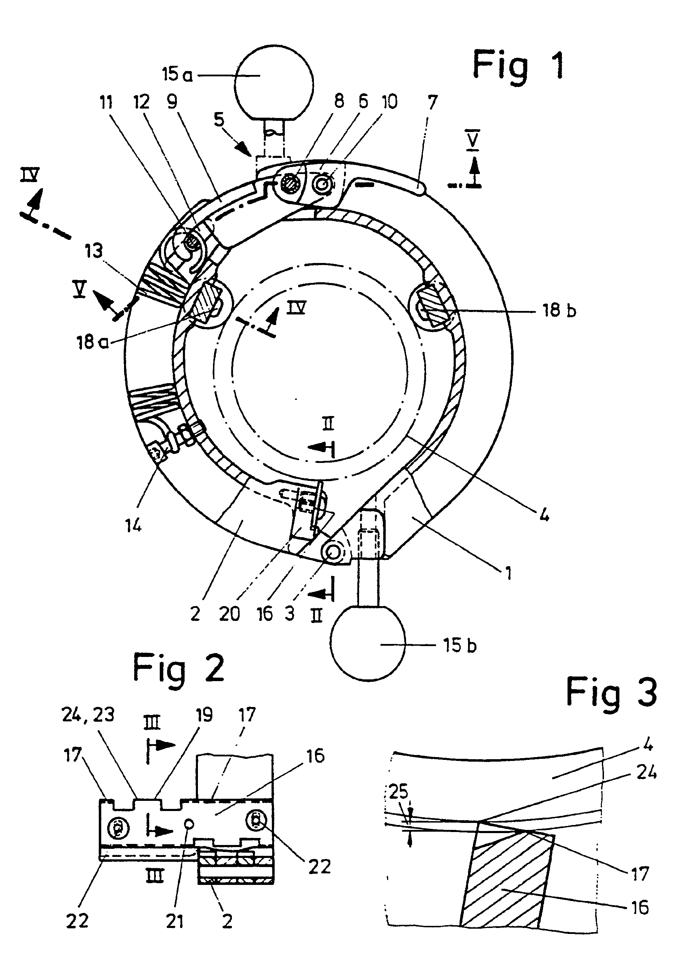

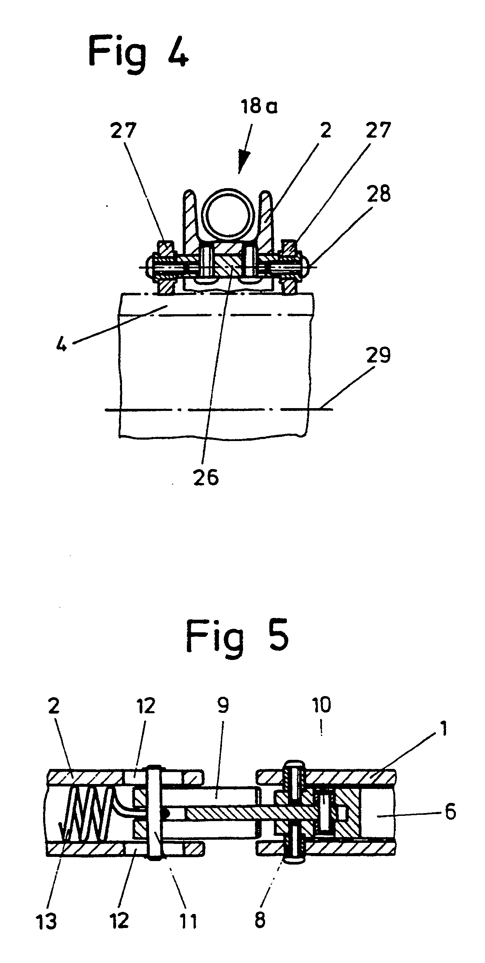

Wie aus Fig. 1 ersichtlich weist das Werkzeug zwei um ein Gelenk 3 aufklappbare Bügel 1 und 2 auf, n-elche nach dem radialen Aufsetzen auf das zu bearbeitende Rohr 4 mittels einer kniehebelförmigen Verbindung 5 zusammenspannbar sind. Wie aus den Fig. 1 und 5 ersichtlich, weist die Verbindung einen ersten Hebel 6 auf, welcher mit einem Ende mittels eines Gelenkes 8 schwenkbar an einem Bügel 1 angeordnet ist und am anderen Ende einen Betätigungsgriff 7 aufweist. Ein zweiter Hebel 9 ist mittels eines Gelenkes 10 mit einem Ende an den ersten Hebel 6 schwenkbar befestigt und mit seinem anderen Ende in einen Bolzen 11 des anderen Bügels 2 einhängbar. Der Bolzen 11 ist in umfangsmässig oder tangential zum Umfang verlaufenden Schlitzen 12 des Bügels 2 verschiebbar gelagert, wobei eine Zugfeder 13 an dem Bolzen eingehängt ist. Mit dem anderen Ende ist die Zugfeder 13 an einer fest mit dem Bügel 2 verbundenen Schraube oder Bolzen 14 eingehängt. Durch das Schliessen des Hebels 6 über dem Totpunkt des Gelenkes 10 ist die Schliessstellung gegen die Kraft der Zugfeder 13 selbsthemmend.

An dem Bügel 2 ist, wie aus den Fig. 1 und 2 ersichtlich, ein Schneid- bzw. Schälmesser 16 angeordnet, welches Führungen 17 aufweist, die zusammen mit zwei Rollenführungen 18a und 18b eine Dreipunktauflage auf dem Rohr 4 bilden, wobei das Werkzeug durch die Kraft der Zugfeder 13 nach dem Schliessen der Verbindung 5 mit den Rollenführungen 18a, 18b und der Führungen 17 den Abmessungen und der Form des Rohres angepasst auf diesem gehalten und darauf drehbar ist. Die Führungen 17 sind in Achsrichtung des Rohres 4 gesehen beidseits einer Schneide 19 angeordnet. Die Führung 17 ist vorzugsweise eine Längskante, welche durch zwei in einem stumpfen Winkel zusammenstossende Flächen gebildet wird.

Das Schneidmesser 16 ist an einem Anlagesteg 20 des Bügels 2 um einen Stift 21 schwenkbar angeordnet und mittels Schrauben 22 leicht auswechselbar gehalten. Die Schneide 19 liegt dabei ausserhalb des umfangsmässig verlaufenden Bereiches des Bügels 2, wodurch die Schneide 19 während der Bearbeitung gut sichtbar ist und durch die Schwenkbarkeit des Schneidmessers 16 sich an die Rohroberfläche in Längsrichtung einstellen kann.

Das Schneidmesser 16 ist mit auf der gegenüberliegenden Seite angeordneten Führungsflächen und einer Schneide als Wende-schneidmesser ausgebildet. Die Schneide 19 weist feine zackenförmige Rillen 23 auf, welche eine einwandfreie Spanbildung gewährleisten.

Wie aus Fig. 3 ersichtlich, ist zwischen der Führung 17 und der Schneidkante 24 eine die Spantiefe festlegende radial verlaufende Distanz 25 vorgesehen, wodurch eine in Umfangs- und Längsrichtung des Rohres immer gleiche, die Oberfläche abschabende Spanbildung erreicht wird. Das Schneidmesser 16 ist mit einer Rollenführung 18a auf dem einen Bügel 2 und die andere Rollenführung 18b auf dem anderen Bügel 1 angeordnet, wodurch im verspannten Zustand der beiden Bügel eine umfangsmässige Zentrierung der drei Anlagestellen am Rohr gegeben ist.

Jede Rollenführung 18a, 18b weist gemäss Fig. 4 zwei beidseits des Bügels 1 bzw. 2 an einer Halterung 26 befestigte Rollen 27 auf, deren gemeinsame Drehachse 28 zur Rohrachse 29 geringfügig schräg verlaufend angeordnet ist. Die Rollen 27 sind am Aussenumfang mit einem Rändel versehen, was den Reibwiderstand zwischen Rolle und Rohr vergrössert. Dies gewährleistet im Zusammenhang mit der Schrägstellung der Rollen-Drehachse 28 einen axialen Vorschub des Werkzeuges während der Drehbewegung.

An dem nicht mit dem Schneidmesser 16 versehenen Bügel 1 sind seitlich zwei annähernd gegenüberliegende Griffe 15a und 15b befestigt, wobei diese auf der Seite des Werkzeuges angeordnet sind, wo auch die Schneide 19 des Schneidmessers 16 liegt. Bei grösseren Werkzeugabmessungen können auch an dem einen Bügel mehr als zwei Griffe seitlich oder mittig am Bügel befestigt sein.

Durch die besondere Anordnung der Griffe 15a und 15b an einem Fügel 1 kann die Drehbewegung des Werkzeuges und somit der Schneidvorgang bei gleichmässiger Kraftübertragung durch beide Hände erfolgen, wobei die Feder als ausgleichendes Element wirkt. Das Oeffnen und Schliessen der beiden Bügel kann ebenfalls mit einer Hand erfolgen. Dies gewährleistet eine einfache und leichte Bedienbarkeit des Werkzeuges.

**Patentansprüche**

1. Werkzeug zum Abschälen von Rohroberflächen, insbesonders bei Kunststoffrohren, mittels eines spanenden Schneidwerkzeuges, welches an einer um das Rohr drehbaren und am Rohr mit Rollen geführten Halterung angeordnet ist, dadurch gekennzeichnet, dass die Halterung zwei um ein Gelenk (3) aufweitbare und gegen eine Federkraft zusammenspannbare Bügel (1, 2) aufweist und dass das Schneidwerkzeug als Schneidmesser (16) ausgebildet ist und eine Führung (17) aufweist, welche zusammen mit zwei Rollenführungen (18a, 18b) eine Dreipunktabstützung des Werkzeuges am Rohr (4) bilden.

2. Werkzeug nach Anspruch 1, dadurch gekennzeichnet, dass die Führung (17) in Längsrichtung der Schneidkante (24) gesehen beidseits der Schneide (19) angeordnet ist.

3. Werkzeug nach Anspruch 1 oder 2, dadurch gekennzeichnet, dass die Führung (17) zur Schneidkante (24) eine die Spantiefe ergebende Distanz (25) aufweist.

4. Werkzeug nach einem der Ansprüche 1 bis 3, dadurch gekennzeichnet, dass das Schneidmesser (16) um einen Drehpunkt (21) schwenkbar an einem der Bügel (2) leicht auswechselbar befestigt ist

5. Werkzeug nach einem der Ansprüche 1 bis 4, dadurch gekennzeichnet, dass an einem Bügel (2) das Schneidmesser (16) und eine Rollenführung (18a) und am anderen Bügel (1) die zweite Rollenführung (18b) angeordnet ist.

6. Werkzeug nach einem der Ansprüche 1 bis 5, dadurch gekennzeichnet, dass die beiden Bügel (1, 2) mittels kniehebelförmig wirkenden Hebeln (6, 9) miteinander verbindbar sind.

7. Werkzeug nach Anspruch 6, dadurch gekennzeichnet, dass ein erster Hebel (6) mit einem Ende an einem Bügel (1) gelenkig angeordnet ist und am anderen Ende einen Betätigungsgriff (7) aufweist und dass ein zweiter Hebel (9) mit einem Ende am ersten Hebel (6) gelenkig angeordnet ist und mit seinem anderen Ende an einem Bolzen (11) des anderen Bügels (2) einhängbar ist.

8. Werkzeug nach Anspruch 7, dadurch gekennzeichnet, dass der Bolzen (11) umfangsmässig bzw. tangential zum Umfang gegen die Kraft einer Zugfeder (13) verschiebbar am Bügel (2) angeordnet ist.

9. Werkzeug nach einem der Ansprüche 1 bis 8, dadurch gekennzeichnet, dass die Drehachse (28) der Rollenführungen (18a, 18b) zur Längsachse (29) in einem spitzen Winkel verläuft.

10. Werkzeug nach einem der Ansprüche 1 bis 9, dadurch gekennzeichnet, dass die Schneide (19) des Schneidmessers (16) feine zackenförmige Rillen (23) aufweist.

11. Werkzeug nach einem der Ansprüche 1 bis 10, dadurch gekennzeichnet, dass an dem nicht mit dem Schneidmesser (16) versehenen Bügel (1) mindestens zwei Griffe (15a, 15b) zum Drehen des Werkzeuges angeordnet sind.

## Claims

1. Tool for shaving tube surfaces, in particular for plastics tubes, by means of a material-removing cutting tool which is arranged on holding means rotatable about the tube and guided on the tube with rollers, characterised in that the holding means has two brackets (1, 2) which can be opened up about a joint (3) and can be clamped together against a spring force and in that the cutting tool is formed as a cutting blade (16) and has a guide (17) which, together with two roller guides (18a, 18b), form a three-point support of the tool on the tube (4).

2. Tool according to claim 1, characterised in that the guide (17) is arranged on both sides of the cutting edge (19) seen in the longitudinal direction of the cutting edge (24).

3. Tool according to claim 1 or 2, characterised in that the guide (17) has a spacing (25) from the cutting edge (24), defining the cutting depth.

4. Tool according to one of claims 1 to 3, characterised in that the cutting blade (16) is secured pivotably about a point of rotation (21) in a readily exchangeable fashion to one of the brackets (2).

5. Tool according to one of claims 1 to 4, characterised in that the cutting blade (16) and a roller guide (18a) are arranged on one bracket (2) and the second roller guide (18b) is arranged on the other bracket (1).

6. Tool according to one of claims 1 to 5, characterised in that the two brackets (1, 2) can be joined together by means of levers (6, 9) acting in the manner of a knuckle joint.

7. Tool according to claim 6, characterised in that a first lever (6) is hingedly arranged at one end on one bracket and has an actuation handle (7) on the other end, and in that a second lever (9) is hingedly arranged at one end on the first lever (6) and, suspended at its other end, can be hung on to a pin (11) of the other bracket (2).

8. Tool according to claim 7, characterised in that the pin (11) is arranged on the bracket (2) so as to be movable peripherally or tangentially to the circumference against the force of a tension spring (13).

9. Tool according to one of claims 1 to 8, characterised in that the axis of rotation (28) of the roller guides (18a, 18b) extends at an acute angle to the longitudinal axis (29).

10. Tool according to one of claims 1 to 9, characterised in that the cutting edge (19) of the cutting blade (16) has fine zig-zag shaped grooves (23).

11. Tool according to one of claims 1 to 10, characterised in that on the bracket (1) not provided with the cutting blade (16) at least two handles (15a, 15b) are arranged for rotating the tool.

## Revendications

1. Outil destiné à l'écroûtage des tubes, en particulier des tubes en matière plastique, au moyen d'un outil de coupe formant un copeau, lequel outil est disposé sur une monture qui est susceptible de tourner autour du tube et qui est guidé sur le tube au moyen de rouleaux, caractérisé en ce que la monture présente deux étriers (1, 2) qui sont susceptibles d'être ouverts en pivotant sur une articulation (3) et qui peuvent être serrés ensemble à l'encontre de la force d'un ressort et en ce que l'outil de coupe est conformé en couteau de coupe (16) et présente un élément de guidage (17) qui forme, en même temps que deux éléments de guidage à rouleau (18a, 18b), un appui trois points de l'outil sur le tube (4).

2. Outil selon la revendication 1, caractérisé en ce que l'élément de guidage (17) est disposé, vu dans le sens de la longueur de l'arête de coupe (24) de chaque côté du tranchant (19).

3. Outil selon la revendication 1 ou 2, caractérisé en ce que l'élément de guidage (17) présente, par rapport à l'arête de coupe (24), un écart (25) qui détermine l'épaisseur du copeau.

4. Outil selon l'une des revendications 1 à 3, caractérisé en ce que le couteau de coupe (16) est fixé sur un étrier (2) de façon à pouvoir pivoter autour d'un point de rotation (21) et à pouvoir être remplacé facilement.

5. Outil selon l'une des revendications 1 à 4, caractérisé en ce que le couteau de coupe (16) et un élément de guidage à rouleau (18a) sont fixés sur un (2) des étriers et en ce que le deuxième élément de guidage (18b) est disposé sur l'autre étrier (1).

6. Outil selon l'une des revendications 1 à 5, caractérisé en ce que les deux étriers (1, 2) peuvent être reliés entre eux au moyen de leviers (6, 9) fonctionnant à la façon d'un levier articulé.

7. Outil selon la revendication 6, caractérisé en ce qu'un premier levier (6) est disposé sur un étrier (1) de façon articulée par une de ses extrémités et présente à l'autre extrémité une poignée d'actionnement (7) et en ce qu'un deuxième levier (9) est disposé de façon articulée par une de ses extrémités sur le premier levier (6) et peut être accroché par son autre extrémité à une tige (11) de l'autre étrier (2).

8. Outil selon la revendication 7, caractérisé en ce que la tige (11) est disposée sur l'étrier (2), de façon à pouvoir être déplacée sur la périphérie ou tangentiellement à la périphérie, à l'encontre de la force d'un ressort de traction (13).

9. Outil selon l'une des revendications 1 à 8, caractérisé en ce que l'axe de rotation (28) des éléments de guidage à rouleau (18a, 18b) forme un angle aigu par rapport à l'axe longitudinal (29).

10. Outil selon l'une des revendications 1 à 9, caractérisé en ce que le tranchant (19) du couteau de coupe (16) présente de fines stries (23) en forme de dents.

11. Outil selon l'une des revendications 1 à 10, caractérisé en ce qu'au moins deux poignées (15a, 15b), destinées à tourner l'outil, sont disposées sur l'étrier (1) qui n'est pas muni de couteau de coupe (16).

# Fig 1

15 a

11  12  9    5    8  6  10    7

IV

13

V

18 a

18 b

IV

II

4

14

1

2  20  16  3  II

15 b

# Fig 2

24, 23    III    19    17

17                    16

22

III

22    21    2

# Fig 3

4

24

25

17

16

# Fig 4

# Fig 5